# EUROPEAN PATENT SPECIFICATION

(11) **EP 2 187 596 B1**
(45) Date of publication and mention of the grant of the patent: **23.12.2015**
(21) Application number: 08305809.9
(22) Date of filing: 18.11.2008
(51) Int. Cl.: H04L 29/08

(54) **Automatic profiling method of a location**
Automatisches Profilverfahren einer Stelle
Procédé de profilage automatique d'un emplacement

(43) Date of publication of application: 19.05.2010
(73) Proprietor: ALCATEL LUCENT, 92100 Boulogne-Billancourt (FR)
(72) Inventor: Kamga, Guy-Bertrand, 91620, NOZAY (FR); Betge Brezetz, Stéphane, 91620, NOZAY (FR); Piekarec, Sophie, 91620, NOZAY (FR); Dupont, Marie-Pascale, 91620, NOZAY (FR)
(74) Representative: Sciaux, Edmond

(56) References cited:
- WO-A-01/61612
- WO-A-02/104022
- US-A1- 2006 059 044

## Description

The present invention is related to a profiling method and an associated profiling engine destined to be used for customization services.

Telecommunication networks allow to get various information about their users, but these information are so far largely unexploited.

There are solutions, using a User Profiling engine, that profile the user taking into account the location as an element of his context. For instance, these solutions determine that a user may be interested in local news when he is at home and in business news when he is at work. Therefore, user profiling engines trigger the computation of dedicated applications as a function of the profile of a user and his location.

Companies such as JCDecaux™, Clear Channel™, Viacom™, etc. classically deliver ads on billboards in public places (street, corridor, station, airport, bus shelter, commercial centre, stadium, etc. ) but these ads are fixed, or at most not targeted per user.

There are other solutions (e.g. Location-based Services) which integrate the location for the personalization such as targeted advertising. Other solutions such as the Adaptive Advertisements of Onestop Media Group (Toronto, Canada) consist in changing the displayed contents in response of external inputs originated from variables such as the date, time, location, weather, stock ticker, etc. These solutions select an advertisement depending on the location.

Other prior art solutions in the literature exist as listed in the followings :
- In document US Patent Application Publication no 2007/0168131, it is described a personalized application which proposes an interactive system and method of delivering individualized information according to the user profile and the location (with its geographical parameters).

The document US Patent Application Publication 2004/0002897 describes a targeted ad system (based on user profile) for wireless customers.

The document US Patent Application Publication 2004/0203852 describes a system that keeps up to date the user information such as preferences, location (only geographical parameters).

The document US Patent Application Publication 2002/0142722 shows a recommendation system that generates recommendations for one or more items based on user preferences and one or more environmental factors (e.g. spatial location, weather, user's motion, ...).

The document US Patent Application Publication 7,035,653 describes a system and method of creating affinity groups of wireless device users, and distributing targeted content to users, using user profiles.

The article titled "Ad-me: Wireless Advertising Adapted to User Location, Device and Emotions", Proceedings of the 37th Hawaii International Conference on System Sciences - 2004, Hristova and al, and the article "Location Based Advertising", M-Business 2002, the First International conference on Mobile Business, Koelmel and al, describe the location information as an additional information on the user or his device in order to better customize the services according to the user or device's information.

All these prior art documents disclose either a user profiling engine that computes the profile of a user by using the service usage traces (web, video, music, purchase, ...), or a personalized application, such as targeted ad or content recommender, which selects an ad or a content according to the user or the location.

But, in order to be able to target the user, these solutions need either to track the user or to get a location information from a user based on a voluntary act (interactivity needed).

The document WO 01/61612 appears to represent the most relevant prior art.

The present invention aims at providing a drastically different approach in the profiling techniques.

The invention is defined in independent claims 1 and 5.

The object of the present invention, according to an embodiment, is a profiling method **characterized in that** it comprises the following steps :
- defining a zone to be stored in a memory,
- detecting persons entering in the zone,
- retrieving the profile data associated to the detected persons,
- computing correlations between the persons, their associated profile data and related behaviours linked to the zone, and possibly data related to the zone itself to determine a profile of the zone.

Telecommunication operators/service providers have all the information to know the type of people that go through a given location or zone. The knowledge of the type of this location (e.g. location crossed by young, or old, or student, or business men, ...) should enable a large range of new revenue generating applications. Targeted advertising (consisting in pushing ads related to the location profile) is certainly one of the key applications.

This embodiment of the invention takes advantage of the knowledge of the persons crossing or entering the zone to create a "profile" of a location or zone by computing statistics concerning the persons aggregating the data of the users frequenting this location.

The invention provides an efficient way to automatically characterize a location taking into account notably the various people frequenting this location.

According to an embodiment of the invention, said computing step takes into account the density of persons within predetermined timeframes.

According to an embodiment of the invention, the data related to the zone are in the group {event; shops of the zone} and are provided by a telecommunication network operator via a Graphical User Interface.

According to an embodiment of the invention, the data related to the zone comprise contextual information such as the weather, the temperature.

The object of the present invention, according to an embodiment, is as well a profiling engine **characterized in that** it comprises :
- means for defining a zone,
- means for detecting persons entering in the zone,
- means for retrieving the profile data associated to the detected persons,
- means for computing correlations between the persons, their associated profile data including their related behaviours linked to the zone, and data related to the zone itself in order to determine a profile of the zone.

This embodiment of the invention advantageously provides a profiling engine, usually reduced to practise through a software module, which allows to characterize a location or zone, based for example on the data of people frequenting this location (e.g. location frequently crossed by young or old persons, or student, or business men, ...).

According to an embodiment of the invention, the profiling engine comprises a configuration module adapted to use configuration parameters file or database allowing the profiling engine operator to set parameters such as :
- the boundaries of the zone to profile output from said means for defining a zone ,
- the storage parameters such as the level of information to be stored,
- the detection parameters when detecting the persons such as the values of timers, the detection frequency,
- the type of the zone.

According to an embodiment of the invention, the profiling engine includes input interfaces to acquire the user profile data, in that the means for detecting persons include Global Positioning System, GSM-based localization techniques, motion sensing system, RFID or NFC detectors, WIFI detectors, and in that it comprises output interfaces to be used by several applications for location personalization, e.g. targeted Advertisement application, business opportunities analysis application, products positioning optimization application in a mall.

According to an embodiment of the invention, the profiling engine comprises means for computing persons' behaviors when visiting the zone, said means being adapted to classify the persons in several categories, as for instance:
- those who only pass through this zone during a specific period,
- those who pass and return through this zone during a specific period regularly,
- those who come and stay in this zone for a specified period before moving.

According to an embodiment of the invention, the profiling engine comprises a density computation module adapted to determine the density of persons in the zone according to the context, e.g. time of the day, day of the week, or the like.

According to an embodiment of the invention, the profiling engine comprises a group evaluation module adapted to estimate the possible detected person groups that exist among the persons present in the zone, the detection of these groups being retrievable from a community profile Database, their buddy lists or their personal address books.

Other objects and further features of the present invention will be apparent from the following detailed description when read in conjunction with the accompanying drawing :

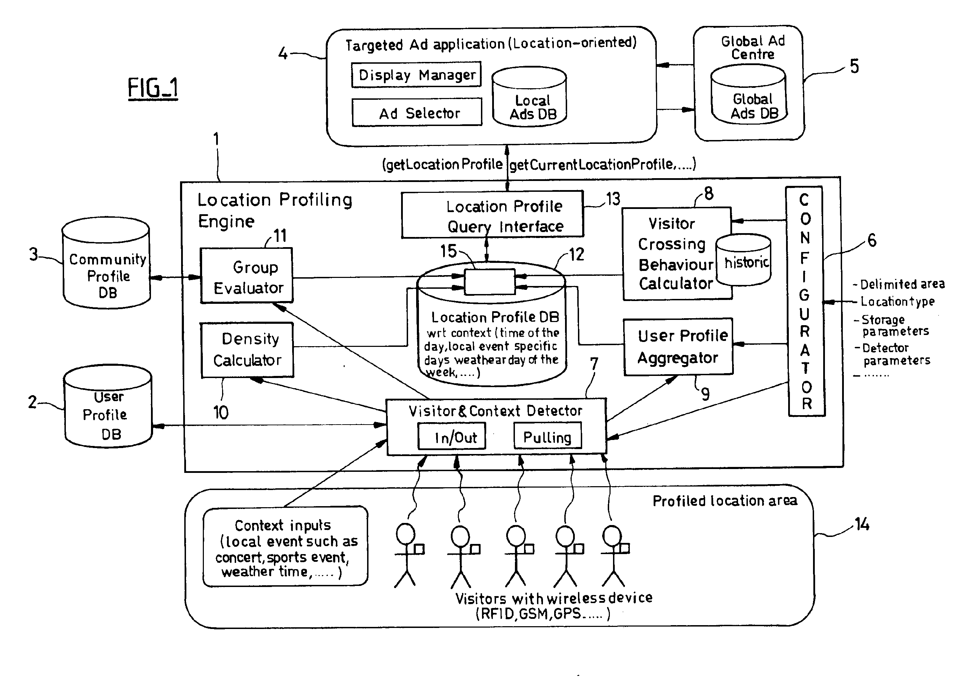

Fig. 1 schematically illustrates an embodiment of a profiling engine according to the invention.

A description will hereinafter be given of embodiments of the present invention, by referring to the drawings

The embodiment illustrated in the figure 1 focuses only on the Profiling Engine 1 itself, so-called Location Profiling Engine 1, depicted in gray colour in this figure. The other modules depicted in this figure, such as the User Profile Database, the Community Profile Database, the Location-oriented targeted Ad application server and the global Ad centre are not in the core scope of the embodiment of the invention and are well-known means for the Man skilled in the Art. Nevertheless, they are illustrated as they interact by providing inputs or consuming the outputs of the Profiling Engine.

The user profile database 2 stores user interest/demographic data of each user. In the present application, it is noted that the term "user" has the meaning as the term "person".

The community profile database 3 stores the community description data/role of the users and of their relations. The community profile database 3 stores what has been processed by a community manager (not illustrated) which function is to detect, build, and monitor communities. The community manager is fed with explicit information, as well as with implicit information gathered on different service delivery platforms in order to provide a capability to profile and to monitor the communities. The community manager takes, as input, the following data:
- explicit user declarations (e.g. interests, membership, etc.),
- community service usage traces (e.g. blogging, other community related content consumption traces revealing user interests, etc),
- user profile (interest centres, individual content consumption habits, etc).

These collected data, stored in the community profile database 3, allow to discover, build and dynamically update the knowledge about communities. Moreover, these data can be analyzed to detect trends and roles inside each community or reveal other interesting statistics.

The location-based targeted Ad application server 4 and the global Ad centre 5 are examples of systems that can benefit from the profiling engine 1.

The embodiment of the profiling engine 1 is composed of the following modules:
1) a configuration module 6, called configurator 6, which combines a graphical user interface ("GUI") and a configuration parameters file or database. It allows the operator to set the necessary parameters used by the different modules of the Location Profiling Engine, such as :
   - The delimited zone 14 to profile
   - The storage parameters (level of information to be stored, profile aggregator parameters, ...)
   - The detector parameters (value of different timers, detection frequency, ...)
   - optionally, the location type : corridor, station, street, airport, bus shelter, restaurant, commercial centre, ...
2) a detection module, so-called Visitor & Context Detector 7, is the module which detects when a person or visitor enters or leaves the profiled location or zone. It also takes into account the context inputs such as time, weather and other contextual parameters. This detection module 7 may also take the information about local events such as concert, football match, race, etc.
   The detection module 7 may be assisted thanks to any existing localization and identification technology such as well-known RFID-based detection, GSM-based localization techniques, GPS-based localization technique, etc. Moreover, this detection module 7 may be able to use any human detection possibility in order to estimate the number of visitors, even those who do not have sensor.
   Finally, this detection module 7 may use various methods of detection :
   - well-known Opt-In/Opt-Out technique : use of an equipment which automatically detects visitors by receiving a signal sent by the visitor sensor,
   - well-known pulling technique: use of a system which regularly scans the location zone to detect visitors.
3) a Visitor Crossing Behaviour Calculator 8 allows to determine the crossing behaviour of the visitors of the location. This module classifies the visitors in several categories, as for instance:
   - Those who only pass through this location during a specific period (e.g. a day)
   - Those who pass and return through this location during a specific period regularly (e.g. work itinerary)
   - Those who come and stay in this location for a specified period before moving.
4) a person Profile Aggregation module or aggregator 9 computes and stores the location profile by aggregating the profile data (originated from the User Profile Database 2) of the detected persons. Some possible results for a profiled location are :
   - Location profile data from 8 a.m. to 10 a.m. (from Monday to Friday)
   - 55% of females and 45% of males, 20% of [15-20], 30% of [21-30], 40% of [31-50] and 10% beyond 50 age old
   - average interest domains: sports = 30%, cinema = 40%, adventure=15%, new technologies=60%, tourism=20%

Note: we can see that, during this period, this location is more frequented by professional active people.
- location profile data from 2 p.m. to 4 p.m. (from Monday to Friday)
- 60% of males and 40% of females, 10% of [21-30], 25% of [31-50], 50% of [51-60] and 15% beyond 60 age old
- average interest domains: sports=10%, cinema=50%, tourism=40%, new technologies=20%, adventure=5%

Note: we can see that, during this period, this location is more frequented by retired people.

This aggregator 9 comprises some basic mechanisms to compute such a semantic description of each group.
5) a Density computation module or Density Calculator 10 allows to determine the density of people of the location according to the context (e.g. time of the day, day of the week, ...).
6) a group evaluation module or Group Evaluator 11 is the module in charge of the estimation of the possible visitor groups that exist in the overall people present in the location. The detection of these groups can be done by using the community profile Database 3, their buddy lists or their personal address books. These group may be:
   - virtual: meaning that each group gathers persons pertaining to the same community (but each person doesn't know each other)
   - concrete: meaning that each group gathers persons who know each other (e.g. a group of friends).
7) a Location Profile Database 12 contains a correlation processor 15 for computing correlations between the persons detected, their associated profile data including their related behaviours linked to the zone (as computed by the calculator 8), and data related to the zone itself in order to determine a profile of the location.
8) The Location Profile Query Interface 13 provides access and query interface to the applications making use of location profiling computed data, e.g. API to retrieve data from the location profile Database.

This location profiling engine can be used by various applications to be personalized. Service customization applications will use the location profile information to deliver a more dedicated or targeted service for a specific location. Example of such applications are:
- targeted advertisement according to the type of location,
- applications which make use of location profile data inherently within their service logic. Such example is product positioning optimization in a mall.

The advantages of the invention are notably:
- For the service providers: the use of the invention will allow the service providers to better know (even in real-time) where and when emphasizing a specific service or product,
- For the end-user: the end-user will benefit from targeted services anywhere, even on public devices such as billboard.
- For the location itself (city, local store, ...): it will allow to push the right message to the right persons in the right location.

## Claims

1. Profiling method comprising the following steps :
- defining a zone,
- detecting persons entering in the zone,
- retrieving profile data associated to the detected persons,
- computing correlations between the persons, their associated profile data including their related behaviors linked to the zone and data related to the zone itself in order to determine a profile of the zone, **characterized in that** it comprises:
- computing persons' crossing behaviors when visiting the zone, in order to classify the persons in several categories, as for instance:
- those who only pass through this zone during a specific period,
- those who pass and return through this zone during a specific period regularly,
- those who come and stay in this zone for a specified period before moving.

2. Method according to claim 1 **characterized in that** said computing step takes into account the density of persons within predetermined timeframes.

3. Method according to claim 1 or 2 **characterized in that** the data related to the zone are in the group {event; shops of the zone} and are provided by a telecommunication network operator via a Graphical User Interface.

4. Method according to claim 1 or 2 **characterized in that** the data related to the zone comprise contextual information such as the weather, the temperature.

5. Profiling engine comprising:
- means for defining a zone,
- means for detecting persons entering in the zone,
- means for retrieving profile data associated to the detected persons,
- means (15) for computing correlations between the persons, their associated profile data including their related behaviours linked to the zone, and data related to the zone itself in order to determine a profile of the zone **characterized in that** it comprises:
- means (8) for computing persons' crossing behaviors when visiting the zone, said means being adapted to classify the persons in several categories, as for instance:
- those who only pass through this zone during a specific period,
- those who pass and return through this zone during a specific period regularly,
- those who come and stay in this zone for a specified period before moving.

6. Profiling engine according to claim 5, **characterized in that** it comprises a configuration module (6) adapted to use a configuration parameters file or database allowing the profiling engine operator to set parameters such as :
- the boundaries of the zone to profile output from said means for defining a zone ,
- the storage parameters such as the level of information to be stored,
- the detection parameters when detecting the persons such as the values of timers, the detection frequency,
- the type of the zone.

7. Profiling engine according to claim 5 or 6, **characterized in that** it includes input interfaces to acquire user profile data, **in that** the means for detecting persons include Global Positioning System, GSM-based localization techniques, motion sensing system, RFID or NFC detectors, WIFI detectors, and **in that** it comprises output interfaces to be used by several applications for location personalization, e.g. targeted Advertisement application, business opportunities analysis application, products positioning optimization application in a mall.

8. Profiling engine according to any of claims 5 to 7 **characterized in that** it comprises a density computation module (10) adapted to determine the density of persons in the zone according to the context, e.g. time of the day, day of the week, or the like.

9. Profiling engine according to any of claims 5 to 8 **characterized in that** it comprises a group evaluation module (11) adapted to estimate possible detected person groups that exist among the persons present in the zone, the detection of these groups being retrievable from a community profile database (3), their buddy lists or their personal address books.

## Patentansprüche

1. Profilierungsverfahren, die folgenden Schritte umfassend:
- Definieren einer Zone,
- Feststellen von Personen, welche die Zone betreten,
- Abrufen von Profildaten zu den festgestellten Personen,
- Errechnen von Korrelationen zwischen den Personen, wobei deren assoziierte Profildaten ihre zugeordneten, mit der Zone zusammenhängenden Verhaltensweisen sowie Daten zur Zone selbst umfassen, zwecks Bestimmung eines Profils der Zone, **dadurch gekennzeichnet, dass** es umfasst:
- Errechnen des Durchgangsverhaltens der Person bei ihrem Besuch der Zone, um so die Personen in verschiedene Kategorien wie etwa folgende zu unterteilen:
- solche Personen, welche die Zone lediglich einen bestimmten Zeitraum lang durchqueren,
- solche, welche die Zone regelmäßig hin und wieder zurück durchqueren,
- solche, welche kommen und sich dann eine bestimmte Zeit lang in der Zone aufhalten, ehe sie sich weiterbewegen.

2. Verfahren nach Anspruch 1, **dadurch gekennzeichnet, dass** besagter Errechnungsschritt die Personendichte innerhalb voreingestellter Zeitrahmen berücksichtigt.

3. Verfahren nach Anspruch 1 oder 2, **dadurch gekennzeichnet, dass** die auf die Zone bezogenen Daten in der Gruppe enthalten sind (Veranstaltung, Geschäfte der Zone) und von einem Telekommunikationsnetzwerkbetreiber über eine grafische Benutzerschnittstelle zur Verfügung gestellt werden.

4. Verfahren nach Anspruch 1 oder 2, **dadurch gekennzeichnet, dass** die auf die Zone bezogenen Daten kontextuelle Informationen wie etwa Wetter und Temperatur umfassen.

5. Profilgenerator, umfassend:
- Mittel für das Definieren einer Zone,
- Mittel für das Feststellen von Personen, welche die Zone betreten,
- Mittel für das Abrufen zu Profildaten zu den festgestellten Personen,
- Mittel (15) für das Errechnen von Korrelationen zwischen den Personen, wobei deren assoziierte Profildaten ihre zugeordneten, mit der Zone zusammenhängenden Verhaltensweisen sowie Daten zur Zone selbst umfassen, zwecks Bestimmung eines Profils der Zone, **dadurch gekennzeichnet, dass** es umfasst:
- Mittel (8) für das Errechnen des Durchgangsverhaltens der Person bei ihrem Besuch der Zone, wobei besagte Mittel dafür ausgelegt sind, die Personen in verschiedene Kategorien wie etwa folgende zu unterteilen:
- solche Personen, welche die Zone lediglich einen bestimmten Zeitraum lang durchqueren,
- solche, welche die Zone regelmäßig hin und wieder zurück durchqueren,
- solche, welche kommen und sich dann eine bestimmte Zeit lang in der Zone aufhalten, ehe sie sich weiterbewegen.

6. Profilgenerator nach Anspruch 5, **dadurch gekennzeichnet, dass** dieser ein Konfigurationsmodul (6) umfasst, ausgelegt für die Verwendung einer Konfigurationsparameterdatei oder Datenbank, die dem Bediener des Profilgenerators das Einstellen von Parametern wie zum Beispiel folgender ermöglicht:
- Grenzen der Zone für das Profilieren der Datenausgabe besagter Mittel für das Festlegen der Zone,
- Speicherparameter wie etwa die Menge der zu speichernden Informationen,
- Feststellungsparameter beim Feststellen der Personen wie zum Beispiel die Zeitmesswerte oder die Feststellungsfrequenz,
- Zonentyp.

7. Profilgenerator nach Anspruch 5 oder 6, **dadurch gekennzeichnet, dass** er Eingangsschnittstellen umfasst, um Benutzerprofildaten aufzunehmen, dadurch, dass die Mittel für das Erkennen von Personen Lokalisierungstechnik auf der Grundlage des Global-Positioning-Systems (GSM), ein Bewegungsaufnahmesystem, RFID- oder NFC-Detektoren und WLAN-Detektoren verwenden, und dadurch, dass er Ausgangsschnittstellen umfasst, die von mehreren Anwendungen für die Ortungspersonalisierung verwendet werden, etwa Anwendungen für gezielte Werbung, Analysen von Geschäftsmöglichkeiten oder die Optimierung der Produktplatzierung in Einkaufszentren.

8. Profilgenerator nach einem beliebigen der Ansprüche 5 bis 7, **dadurch gekennzeichnet, dass** er ein Personendichten-Berechnungsmodul (10) umfasst, ausgelegt für die Berechnung der Personendichte in der Zone gemäß Kontextgegebenheiten wie Tageszeit, Wochentag usw.

9. Profilgenerator nach einem beliebigen der Ansprüche 5 bis 8, **dadurch gekennzeichnet, dass** er ein Gruppenevaluierungsmodul (11) umfasst, ausgelegt für das Abschätzen möglicher festgestellter Personengruppen, die sich unter den in der Zone anwesenden Personen befinden, wobei das Erkennen dieser Gruppen durch das Abrufen von Daten aus einer Community-Profil-Datenbank (3), von deren Freundeslisten oder von deren persönlichen Adressbüchern ermöglicht wird.

## Revendications

1. Procédé de profilage comprenant les étapes suivantes :
- définir une zone,
- détecter des personnes entrant dans la zone,
- récupérer des données de profil associées aux personnes détectées,
- calculer des corrélations entre les personnes, leurs données de profil associées comprenant leurs comportements relatifs à la zone et les données relatives à la zone elle-même afin de déterminer un profil de la zone, **caractérisé en ce qu'**il comprend l'étape suivante :
- calculer les comportements de passage des personnes lorsqu'elles visitent la zone, afin de classifier les personnes en plusieurs catégories, comme par exemple :
- celles qui ne font que passer par cette zone pendant une période spécifique,
- celles qui passent et reviennent dans cette zone régulièrement pendant une période spécifique,
- celles qui viennent et restent dans cette zone pendant une période spécifique avant de partir.

2. Procédé selon la revendication 1, **caractérisé en ce que** ladite étape de calcul tient compte de la densité de personnes dans des délais prédéterminés.

3. Procédé selon la revendication 1 ou 2, **caractérisé en ce que** les données relatives à la zone sont dans le groupe {événement ; boutiques de la zone} et sont fournies par un opérateur de réseau de télécommunications par le biais d'une interface utilisateur graphique.

4. Procédé selon la revendication 1 ou 2, **caractérisé en ce que** les données relatives à la zone comprennent des informations contextuelles telles que la météo, la température.

5. Moteur de profilage comprenant :
- moyens pour définir une zone,
- moyens pour détecter des personnes entrant dans la zone,
- moyens pour récupérer des données de profil associées aux personnes détectées,
- moyens (15) pour calculer des corrélations entre les personnes, leurs données de profil associées comprenant leurs comportements relatifs à la zone et les données relatives à la zone elle-même afin de déterminer un profil de la zone, **caractérisé en ce qu'**il comprend :
- moyens (8) pour calculer les comportements de passage des personnes lorsqu'elles visitent la zone, lesdits moyens étant conçus pour classifier les personnes en plusieurs catégories, comme par exemple :
- celles qui ne font que passer par cette zone pendant une période spécifique,
- celles qui passent et reviennent dans cette zone régulièrement pendant une période spécifique,
- celles qui viennent et restent dans cette zone pendant une période spécifique avant de partir.

6. Moteur de profilage selon la revendication 5, **caractérisé en ce qu'**il comprend un module de configuration (6) conçu pour utiliser un fichier de paramètres de configuration ou une base de données permettant à l'opérateur du moteur de profilage de définir des paramètres tels que :
- les limites de la zone pour profiler une sortie à partir desdits moyens pour définir une zone,
- les paramètres de stockage tels que le niveau d'informations à stocker,
- les paramètres de détection pour la détection des personnes, tels que les valeurs des minuteries, la fréquence de détection,
- le type de la zone.

7. Moteur de profilage selon la revendication 5 ou 6, **caractérisé en ce qu'**il comprend des interfaces d'entrée permettant d'acquérir des données de profil d'utilisateur, **en ce que** les moyens pour détecter les personnes comprennent le système de positionnement global GPS, des techniques de localisation basées sur GSM, un système de détection de mouvement, des détecteurs RFID ou NFC, des détecteurs WiFi, et **en ce qu'**il comprend des interfaces de sortie destinées à être utilisées par plusieurs applications pour la personnalisation du lieu, p. ex. une application de publicité ciblée, une application d'analyse des opportunités commerciales, une application d'optimisation du positionnement de produits dans un centre commercial.

8. Moteur de profilage selon l'une quelconque des revendications 5 à 7, **caractérisé en ce qu'**il comprend un module de calcul de densité (10) conçu pour déterminer la densité de personnes dans la zone en fonction du contexte, p. ex. l'heure, le jour ou similaire.

9. Moteur de profilage selon l'une quelconque des revendications 5 à 8, **caractérisé en ce qu'**il comprend un module d'évaluation de groupe (11) conçu pour estimer les groupes de personnes détectées possibles qui existent parmi les personnes présentes dans la zone, la détection de ces groupes pouvant être récupérée dans une base de données de profil de communauté (3), leurs listes de contacts ou leurs carnets d'adresses personnels.
